# EUROPÄISCHE PATENTSCHRIFT

(11) **EP 3 013 510 B1**
(45) Veröffentlichungstag und Bekanntmachung des Hinweises auf die Patenterteilung: **11.07.2018**
(21) Anmeldenummer: 14726589.6
(22) Anmeldetag: 26.05.2014
(51) Int. Cl.: B23K 11/00, B21D 28/26, B21D 35/00, B21D 37/08, B23K 11/14, B23K 11/31

(54) **WERKZEUG ZUM SETZEN MEHRERER WIDERSTANDSSCHWEISSELEMENTE**
TOOL FOR SETTING A PLURALITY OF RESISTANCE WELDING ELEMENTS
OUTIL SERVANT A METTRE EN PLACE UNE PLURALITE D'ELEMENTS DE SOUDAGE PAR RESISTANCE

(30) Priorität: 24.06.2013 DE 102013010443
(43) Veröffentlichungstag der Anmeldung: 04.05.2016
(73) Patentinhaber: Volkswagen Aktiengesellschaft, 38440 Wolfsburg (DE)
(72) Erfinder: GRECO, Danilo, 38442 Wolfsburg (DE); SWENDRAK, Helge, 38464 Groß Twülpstedt (DE); JÄCKEL, Torsten, 38176 Wendeburg (DE); JAHNKE, Olaf, 38165 Lehre (DE)
(86) Internationale Anmeldenummer: PCT/EP2014/060821
(87) Internationale Veröffentlichungsnummer: WO 2014/206669

(56) Entgegenhaltungen:
- EP-A1- 1 270 112
- DE-A1- 19 805 196
- DE-A1-102011 055 654
- DE-A1-102011 117 962
- DE-C1- 3 909 387
- JP-A- H01 186 227
- JP-U- H0 362 675

## Beschreibung

Die Erfindung betrifft ein pressengebundenes Werkzeug zum Setzen mehrerer Widerstandsschweißelemente in wenigstens ein flächiges Werkstück gemäß dem Oberbegriff des Anspruchs 1 (siehe z.B. EP1 270 112 A1). Ein Widerstandsschweißelement ist ein Fügehilfsteil bzw. Fügehilfselement zum Verbinden wenigstens eines flächigen Werkstücks, welches insbesondere aus einem Nicht-Stahlwerkstoff gebildet ist, mit einem zweiten Werkstück, welches insbesondere aus einem Stahlwerkstoff gebildet ist. Widerstandsschweißelemente eignen sich somit hervorragend für den Mischbau im Kfz-Bereich, vorrangig im Kfz-Karosseriebau.

Das Herstellen einer Werkstück- bzw. Bauteilverbindung mit Hilfe solcher Widerstandsschweißelemente kann in einem prinzipiell zweistufigen Verfahren erfolgen. Zunächst werden die Widerstandsschweißelemente in das erste Werkstück eingestanzt oder eingepresst. Dieser Vorgang wird auch als Setzen der Widerstandsschweißelemente bezeichnet. Danach wird das derart vorbereitete erste Werkstück gegenüber dem zweiten Werkstück positioniert und mit diesem an den Widerstandsschweißelementen widerstandsverschweißt. Auf die selbe Weise können auch mehr als zwei Werkstücke bzw. Bauteile dauerhaft und untrennbar gefügt werden.

Aus den Patentschriften DE 42 37 361 C2 und DE 10 2007 036 416 A1 sind selbststanzende bzw. selbstlochende Widerstandsschweißelemente bekannt. Zum Stand der Technik wird ergänzend auch auf die Patentschrift DE 10 2010 031 709 A1 hingewiesen.

Das Setzen der Widerstandsschweißelemente in Großserie erfolgt bislang mit einem robotergeführten Setzkopf, wobei der Setzkopf zusammen mit einer korrespondierenden Setzmatrize in einem C-Bügelgestell oder dergleichen angeordnet ist. Jeder Setzpunkt muss einzeln angefahren werden (serielles Setzen). Ist ein Setzen der Widerstandsschweißelemente von beiden Werkstückseiten (Blechseiten) vorgesehen, muss zudem der Setzkopf um das Werkstück herum geschwenkt werden. Dies ist mit vielen Nachteilen verbunden.

Der Erfindung liegt die Aufgabe zugrunde, eine Möglichkeit zum Setzen von mehreren Widerstandsschweißelementen aufzuzeigen, die wenigstens einen mit dem Stand der Technik einhergehenden Nachteil nicht oder zumindest nur in einem verminderten Umfang aufweist.

Diese Aufgabe wird gelöst durch ein erfindungsgemäßes Werkzeug mit den Merkmalen des Anspruchs 1. Die in den abhängigen Patentansprüchen angegebenen Merkmale beziehen sich auf bevorzugte Weiterbildungen und Ausgestaltungen des erfindungsgemäßen Werkzeugs. Mit den Verwendungsansprüchen erstreckt sich die Lösung der Aufgabe ferner auf bevorzugte Verwendungszwecke eines erfindungsgemäßen Werkzeugs. Sowohl die Merkmale der abhängigen Ansprüche als auch die nachfolgend erläuterten Merkmale sind unabhängig von einer bestimmten Anspruchskategorie allgemeine Merkmale der Erfindung. Die Merkmale einer Anspruchskategorie gelten somit analog auch für die andere Anspruchskategorie.

Ein erfindungsgemäßes Werkzeug zum Setzen mehrerer Widerstandsschweißelemente in wenigstens ein flächiges Werkstück umfasst
- (wenigstens) ein erstes Werkzeugteil und (wenigstens) ein zweites Werkzeugteil zwischen denen das Werkstück im Wesentlichen vollflächig anordenbar ist bzw. angeordnet werden kann und durch eine Schließbewegung des ersten und/oder des zweiten Werkzeugteils in definierter Lage fixierbar ist bzw. fixiert werden kann; und
- mehrere sowohl im ersten Werkzeugteil als auch im zweiten Werkzeugteil angeordnete Setzköpfe, mit denen bzw. vermittels derer im Verlauf der Schließbewegung von beiden Werkstückseiten eine Vielzahl von Widerstandsschweißelementen vorlochfrei in das zuvor zwischen den Werkzeugteilen fixierte Werkstück einstanzbar bzw. einpressbar ist, also eingestanzt oder eingepresst werden kann.

Unter einem flächigen Werkstück wird ein im Vergleich zu seiner flächigen Ausdehnung dünnwandiges Werkstück verstanden. Vorzugsweise handelt es sich um ein aus einem metallischen Blechmaterial gebildetes Blechwerkstück oder um ein blechartiges Werkstück. Ein blechartiges Werkstück ist insbesondere ein aus einem Organoblech (Faser-Matrix-Halbzeug) gebildetes Werkstück. Ein blechartiges Werkstück kann aber auch ein dünnwandiges Gussteil, Verbundteil oder dergleichen sein. Bei dem flächigen Werkstück kann es sich sowohl um ein räumlich geformtes Formteil (bspw. ein Blechformteil) oder um ein unverformtes und im Wesentlichen ebenes Werkstück (bspw. eine Blechplatine oder einen Organoblechzuschnitt) handeln.

Bevorzugt ist das flächige Werkstück aus einem Nicht-Stahlwerkstoff gebildet. Das flächige Werkstück ist insbesondere aus einem Aluminiumblech gebildet, bevorzugt mit einer Blechstärke bzw. Blechdicke von 0,5 mm bis 4,0 mm und besonders bevorzugt von 0,7 mm bis 3,0 mm. Das flächige Werkstück kann insbesondere auch aus einem Organoblech, wie bspw. einem glasfaser- oder kohlenstofffaserverstärkten Kunststoff, gebildet sein. Beides ist zugleich Gegenstand bevorzugter Verwendungen des erfindungsgemäßen Werkzeugs.

Bei dem erfindungsgemäßen Werkzeug handelt es sich um ein pressengebundenes Werkzeug. Bei dem ersten Werkzeugteil handelt es sich insbesondere um ein auf einem Pressentisch anordenbares Werkzeugunterteil und bei dem zweiten Werkzeugteil handelt es sich insbesondere um ein an einem Pressenstößel befestigbares Werkzeugoberteil. Durch Absenken und Anheben des Pressenstößels kann das Werkzeugoberteil relativ zum Werkzeugunterteil bewegt werden. Die Schließbewegung und Schließkraft wird pressenseitig erzeugt. Anstelle einer Presse kann auch eine Schließvorrichtung oder dergleichen verwendet werden.

Bevorzugt ist das erfindungsgemäße Werkzeug ähnlich wie ein pressengebundenes Umform- und/oder Schneidwerkzeug aufgebaut und weist dementsprechende Komponenten und Merkmale, bspw. zwei Grundplatten (gegebenenfalls mit Pinolensteckbohrungen), einen oder mehrere Niederhalter, mehrere Führungsmittel, mehrere Werkstückaufnahmen und dergleichen, auf.

Das flächige Werkstück wird in dem erfindungsgemäßen Werkzeug zwischen dem ersten Werkzeugteil und dem zweiten Werkzeugteil in definierter Lage, d. h. mit vorgegebener Ausrichtung und Position, fixiert. Hierbei befindet sich das flächige Werkstück vollflächig, im Sinne von ganz bzw. vollständig, zwischen den Werkzeugteilen. Die Fixierung erfolgt insbesondere durch Klemmung zwischen den Werkzeugteilen, wozu die Werkzeugteile entsprechend ausgebildet sind und bspw. einen oder mehrere Werkstückaufnahmen, Niederhalter, Klemmrahmen und/oder dergleichen aufweisen können.

Die Klemmung erfolgt während der Schließbewegung bzw. während des Schließhubs und wird bis zu einem Bewegungsendpunkt (UT) der Schließbewegung aufrechterhalten. Die Klemmung kann über dem Werkstück verteilt punktuell oder flächig (vollflächig oder bereichsweise) erfolgen. Die Fixierung bzw. Klemmung gewährleistet in vorteilhafter Weise die Beibehaltung einer definierten Lage während des Einstanzens oder Einpressens der Widerstandsschweißelemente und verhindert ferner, durch Abstützung, eine elastische oder gegebenenfalls sogar plastische Verformung des Werkstücks, bspw. durch Verwindung, während des Einstanzens oder Einpressens, wobei mitunter erhebliche Kräfte auf das Werkstück einwirken. Insbesondere Aluminiumbleche, vorzugsweise mit der o. g. Blechdicke, sind hierfür besonders anfällig.

Ein Setzkopf ist eine mehrere Einzelteile umfassende, insbesondere zu einer Baueinheit zusammengefasste, Einrichtung, mit der während der Schließbewegung des Werkzeugs selbsttätig ein Widerstandsschweißelement (gegebenenfalls auch mehrere Widerstandsschweißelemente, falls es sich um einen Mehrfach-Setzkopf handelt) vorlochfrei in das flächige Werkstück eingestanzt oder eingepresst werden kann. Der Setzkopf wirkt hierzu mit einer auf der gegenüberliegenden Werkstückseite angeordneten Setzmatrize zusammen. Beim Einstanzen wird ein Abfallstück (Butzen) erzeugt, der über die Setzmatrize abgeführt werden kann. Das Einpressen erfolgt hingegen abfallfrei.

Die Setzköpfe des erfindungsgemäßen Werkzeugs können hydraulisch, pneumatisch oder elektromagnetisch betätigt sein. Bevorzugt handelt es sich um mechanisch betätigte Setzköpfe, bei denen die Schließbewegung des Werkzeugs in eine Einstanzkraft bzw. Einpresskraft umgewandelt wird (dies ist auch Gegenstand einer bevorzugten Weiterbildung). Die Setzköpfe des erfindungsgemäßen Werkzeugs können identisch oder unterschiedlich ausgebildet sein. Gemäß der Erfindung ist vorgesehen, dass jeder aktive Setzkopf des erfindungsgemäßen Werkzeugs während der Schließbewegung ein Widerstandsschweißelement in das Werkstück einstanzt bzw. einpresst. Bevorzugt ist eine automatische Zuführung der zu setzenden Widerstandsschweißelemente zu jedem der Setzköpfe vorgesehen. Die Zuführung kann bspw. über im Werkzeug verlegte Zuführschläuche, Zuführrohre, Zuführschienen oder dergleichen erfolgen, die von einem externen Zuführgerät gespeist werden. Bevorzugt ist vorgesehen, dass die Setzköpfe ausbaubar und/oder deaktivierbar sind, um einen flexiblen Einsatz des erfindungsgemäßen Werkzeugs zu ermöglichen.

Die zu setzenden Widerstandsschweißelemente weisen bevorzugt einen Schaft, einen am Schaft angeformten Elementkopf und einen am gegenüberliegenden Schaftende stirnseitig ausgebildeten Schweißbuckel (oder dergleichen) auf, wie aus dem eingangs genannten Stand der Technik bekannt. Bevorzugt sind die Widerstandsschweißelemente aus einem Stahlwerkstoff oder einem Stahlverbundwerkstoff gebildet und können eine Beschichtung aufweisen. Bevorzugt ist vorgesehen, dass alle mit dem erfindungsgemäßen Werkzeug zu setzenden Widerstandsschweißelemente identisch ausgebildet sind. Ebenso kann jedoch auch vorgesehen sein, dass die zu setzenden Widerstandsschweißelemente unterschiedlich ausgebildet sind.

Das erfindungsgemäße Werkzeug ermöglicht das parallele bzw. simultane und positionsgenaue bzw. präzise Setzen einer Vielzahl von Widerstandsschweißelementen, ohne dass das Werkstück aufgrund der mitunter erheblichen Setzkräfte verformt wird. Das Setzen aller Widerstandsschweißelemente erfolgt innerhalb eines Schließhubs und somit im Wesentlichen zeitgleich oder zumindest innerhalb einer sehr kurzen Zeitspanne. Die mit dem bislang praktizierten seriellen Setzen einhergehenden Nachteile entfallen. Insbesondere können Vorteile hinsichtlich der erforderlichen Fertigungszeit und des Logistikaufwands, der benötigten Produktionsfläche und der Wirtschaftlichkeit erzielt werden.

Bevorzugt können mit dem erfindungsgemäßen Werkzeug wenigstens 5, bevorzugt mehr als 10, besonders bevorzugt mehr als 25, insbesondere mehr als 50 und insbesondere bevorzugt mehr als 75 oder mehr als 100 Widerstandsschweißelemente in das im Werkzeug angeordnete flächige Werkstück eingepresst werden, wozu das Werkzeug eine entsprechende Anzahl von Setzköpfen und korrespondierende Setzmatrizen aufweist. Die Anzahl der maximal setzbaren Widerstandsschweißelemente richtet sich im Wesentlichen nach dem zur Verfügung stehenden Platz im Werkzeug zur Anordnung der Setzköpfe. Falls mehrere eng beieinanderliegende Widerstandsschweißelemente vorgesehen sind, kann das Setzen dieser Widerstandsschweißelemente nacheinander in mehreren erfindungsgemäßen Werkzeugen erfolgen, wobei bevorzugt vorgesehen ist, dass alle im Hinblick auf die Folgeoperationen erforderlichen Widerstandsschweißelemente mit Hilfe eines erfindungsgemäßen Werkzeugs in einem Arbeitshub gesetzt werden. Gemäß der Erfindung ist vorgesehen, dass jedes Werkzeugteil eine Grundplatte und eine hierzu über Gasdruckfedern beabstandete und relativbewegliche Trägerplatte (oder ein funktionsgleiches Trägermodul), an der die Setzköpfe befestigt sind, aufweist, wobei die Trägerplatten während der Schießbewegung gegen die Grundplatten gedrückt und bewegt werden. Ferner ist bevorzugt vorgesehen, dass die an den Trägerplatten befestigten Setzköpfe mechanisch betätigt sind, wozu diese jeweils einen Betätigungsstempel (oder dergleichen) aufweisen, der sich auf der jeweiligen Grundplatte abstützt. Während der Schließbewegung werden aufgrund einer Relativbewegung zwischen der jeweiligen Trägerplatte und der zum selben Werkzeugteil gehörenden Grundplatte die Widerstandsschweißelemente mit Hilfe dieser Betätigungsstempel in das Werkstück eingestanzt bzw. eingepresst.

Des Weiteren ist besonders bevorzugt vorgesehen, dass die Gasdruckfedern im ersten Werkzeugteil und im zweiten Werkzeugteil unterschiedliche Druckkräfte erzeugen, so dass im Verlauf der Schließbewegung zunächst die Widerstandsschweißelemente (im Wesentlichen gleichzeitig) von einer Werkstückseite und erst dann die Widerstandsschweißelemente von der anderen Werkstückseite (im Wesentlichen gleichzeitig) in das Werkstück eingestanzt oder eingepresst werden. Durch das zeitlich gering versetzte aber dennoch im Wesentlichen gleichzeitige Einpressen können die zu einem bestimmten Zeitpunkt auf das Werkstück einwirkenden Kräfte und Biegemomente erheblich verringert werden.

Das erfindungsgemäße Werkzeug kann wenigstens einen Setzkopf aufweisen, mit dem während der Schließbewegung in einen zur Schließrichtung schrägen und insbesondere steilen Werkstückbereich ein Widerstandsschweißelement eingepresst oder eingestanzt werden kann. Ein solcher Setzkopf ermöglicht das Setzen eines Widerstandsschweißelements in einer Schrägrichtung oder Querrichtung, bzw. aus einer seitlichen Richtung. Bevorzugt handelt es sich um einen mechanisch betätigten Setzkopf, wobei die Betätigung bspw. mittels Schieber, insbesondere eines Keilschiebers, erfolgen kann.

Besonders bevorzugt ist vorgesehen, dass das erfindungsgemäße Werkzeug in einer mehrere Pressen und insbesondere auch eine Transfereinrichtung umfassenden Pressenstraße zur Herstellung eines Blechformteils verwendet wird, wobei dieses Werkzeug anstelle eines Umform- und/oder Schneidwerkzeugs in einer der Pressen, bspw. in der vierten oder fünften Pressen- bzw. Werkzeugstufe, eingebaut ist. In der Pressentrasse werden insbesondere Stahlblechformteile oder Aluminiumblechformteile, vorrangig für den Kfz-Karosseriebau, hergestellt, wobei ohne zusätzlichen Aufwand und ohne Taktzeitverlust die später benötigten Widerstandsschweißelemente gesetzt werden können. Falls mehrere eng beieinanderliegende Widerstandsschweißelemente gesetzt werden sollen, können mehrere Pressen der Pressenstraße mit erfindungsgemäßen Werkzeugen bestückt sein, in denen nacheinander das Setzen dieser Widerstandsschweißelemente erfolgt.

Das erfindungsgemäße Werkzeug ist bevorzugt ähnlich wie ein pressengebundenes Umform- und/oder Schneidwerkzeug aufgebaut (wie bereits erläutert) und ist insbesondere hinsichtlich seiner Abmessungen auch an den vorgegebenen Bauraum der Presse angepasst. Besonders bevorzugt ist vorgesehen, dass das erfindungsgemäße Werkzeug zum Setzen der Widerstandsschweißelemente zugleich auch eine formgebende Kalibrieroperation oder eine Umform- und/oder Schneidoperation ausführen kann, wozu dieses Werkzeug entsprechend ausgebildet ist und bspw. einen Ziehstempel, eine Ziehmatrize, eine Schneideinrichtung und/oder dergleichen aufweist.

Die Erfindung wird nachfolgend beispielhaft und in nicht einschränkender Weise mit Bezug auf die schematischen Figuren näher erläutert. Die in den Figuren gezeigten und/oder nachfolgend erläuterten Merkmale können, unabhängig von konkreten Merkmalskombinationen, allgemeine Merkmale der Erfindung sein.
**Fig. 1 bis Fig. 4** zeigen jeweils in einer Schnittansicht ein erfindungsgemäßes Werkzeug zum Setzen von Widerstandsschweißelementen in verschiedenen Stadien der Schließbewegung.
**Fig.** 5 zeigt in einer Draufsicht die automatische Zuführung der Widerstandsschweißelemente zu den Setzköpfen am Werkzeug der Fig. 1 bis 4.

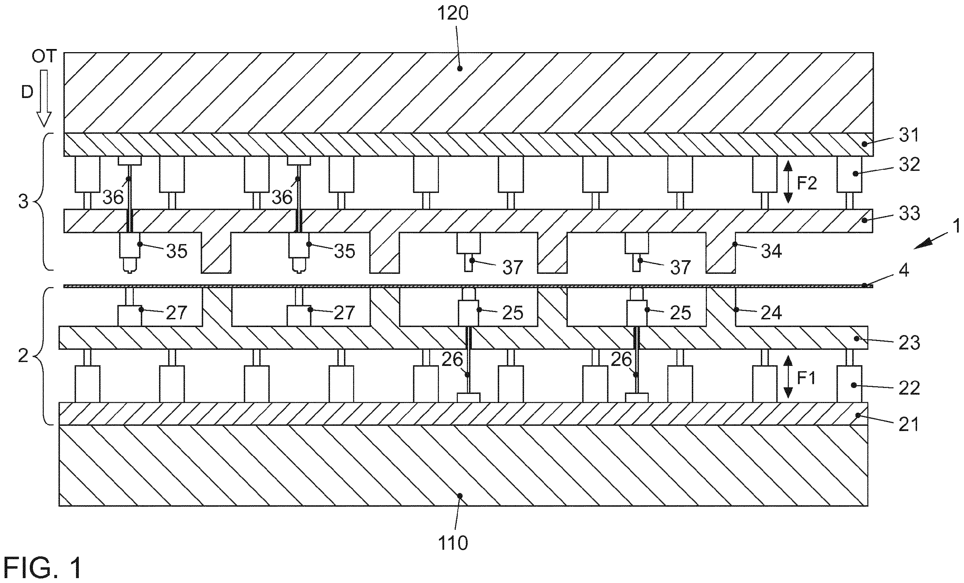

Fig. 1 zeigt ein erfindungsgemäßes Werkzeug 1. Das Werkzeug 1 umfasst ein Werkzeugunterteil 2 und ein Werkzeugoberteil 3. Das Werkzeug 1 ist einer Presse eingebaut, wobei das Werkzeugunterteil 2 auf dem Pressentisch 110 angeordnet und das Werkzeugoberteil 3 am Pressenstößel 120 befestigt ist. Durch Absenken und Anheben des Pressenstößels 120 kann das Werkzeug 1 geschlossen und wieder geöffnet werden. Befestigungsmittel, Führungsmittel und dergleichen sind nicht dargestellt.

Das Werkzeugunterteil 2 weist eine untere Werkzeuggrundplatte 21 und eine hierzu in vertikaler Richtung beabstandete untere Trägerplatte 23 auf. Die in vertikaler Richtung relativbewegliche untere Trägerplatte 23 ist über mehrere Gasdruckfedern 22 gegen die untere Grundplatte 21 abgestützt. Das Werkzeugoberteil 3 weist eine obere Werkzeuggrundplatte 31 und eine hierzu in vertikaler Richtung beabstandete obere Trägerplatte 33 auf. Die in vertikaler Richtung relativbewegliche obere Trägerplatte 33 ist über mehrere Gasdruckfedern 32 gegen die obere Grundplatte 31 abgestützt.

Die untere Trägerplatte 23 und die obere Trägerplatte 33 sind mit sich paarweise gegenüberliegenden Werkstückaufnahmen 24 und 34 ausgebildet. An der unteren Trägerplatte 23 sind mehrere untere Setzköpfe 25 und an der oberen Trägerplatte 33 sind mehrere obere Setzköpfe 35 befestigt. Die Betätigung der unteren Setzköpfe 25 erfolgt mittels unterer Betätigungsstempel 26, die sich auf der unteren Grundplatte 21 abstützen. Die Betätigung der oberen Setzköpfe 35 erfolgt mittels oberer Betätigungsstempel 36, die sich an der oberen Grundplatte 31 abstützen. Jeweils den Setzköpfen 25 und 35 gegenüberliegend sind an der oberen Trägerplatte 33 obere Setzmatrizen 37 und an der unteren Trägerplatte 23 untere Setzmatrizen 27 angeordnet. Die untere Trägerplatte 23 kann als Luftboden und die obere Trägerplatte 33 kann als Niederhalter bezeichnet werden. Die Setzköpfe 25 und 35, sowie die korrespondierenden Matrizen 37 und 27, sind fest und positionsgenau an den Trägerplatten 23 und 33 angebracht.

Mit dem Werkzeug 1 können innerhalb eines Schließhubs und somit im Wesentlichen zeitgleich mehrere Widerstandsschweißelemente in ein flächiges Werkstück 4, das zwischen den Werkzeugteilen 2 und 3 angeordnet ist, eingestanzt oder eingepresst werden, wie nachfolgend erläutert.

Fig. 1 zeigt das Werkzeug 1 im geöffneten Zustand, wobei sich der Pressenstößel 120 im oberen Totpunkt (OT) befindet. Zwischen dem Werkzeugunterteil 2 und dem Werkzeugoberteil 3 ist ein Werkstück 4 angeordnet, wobei ebenso auch mehrere Werkstücke (bspw. aus unterschiedlichen Werkstoffen) zwischen den Werkzeugteilen 2 und 3 positioniert werden können.

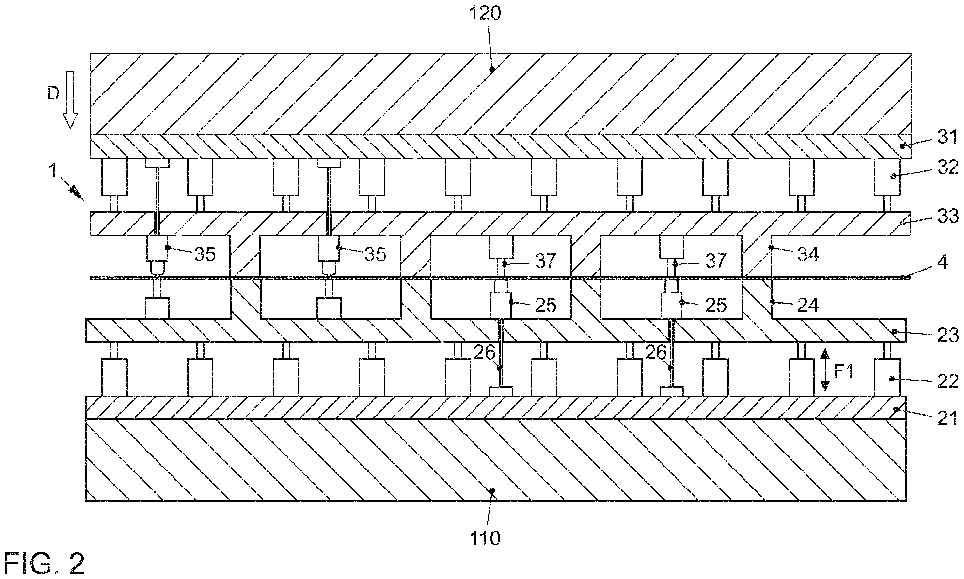

Durch ein sich anschließendes Absenken des Werkzeugoberteils 3, wie mit dem Bewegungspfeil D veranschaulicht, wird das Werkstück 4 an mehreren Stellen zwischen den Werkstückaufnahmen 24 und 34 eingeklemmt und hierdurch in definierter Lage relativ zu den Setzköpfen 25 und 35 fixiert, wie in Fig. 2 gezeigt. Die Setzköpfe 25 und 35 befinden sich nun in beidseitiger Anlage am Werkstück 4. Die Fixierung bleibt während der weiteren Abwärtsbewegung bzw. Schließbewegung D bestehen.

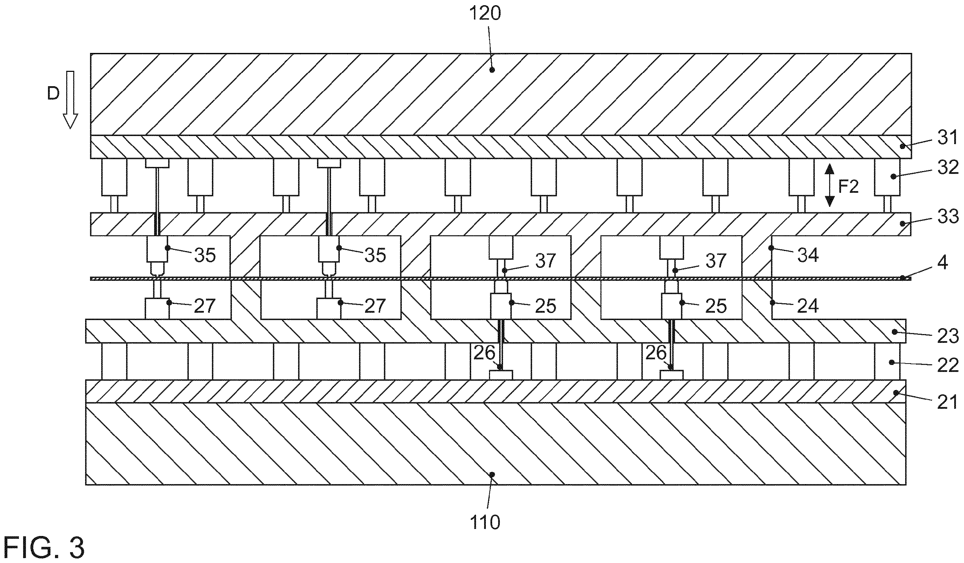

Durch weiteres Absenken D des Werkzeugoberteils 3 wird die untere Trägerplatte 23 entgegen der durch die unteren Gasdruckfedern 22 aufgebrachten Kraft F1 in Richtung der unteren Grundplatte 21 verschoben. Hierbei wird an den unteren Setzköpfen 25 mit Hilfe der sich auf der unteren Grundplatte 21 abstützenden unteren Betätigungsstempel 26 jeweils ein Widerstandsschweißelement positionsgenau von unten (d. h. von der unteren Werkstückseite bzw. unterseitig) in das Werkstück 4 eingestanzt bzw. eingepresst. Das vorlochfreie Einstanzen bzw. Einpressen erfolgt gegen die oberen Setzmatrizen 37. Eine gegebenenfalls erforderliche Stanzabfallausleitung ist nicht dargestellt. In Fig. 3 hat die untere Trägerplatte 23 ihren unteren Totpunkt erreicht. Zu diesem Zeitpunkt sind alle Widerstandsschweißelemente von unten gesetzt.

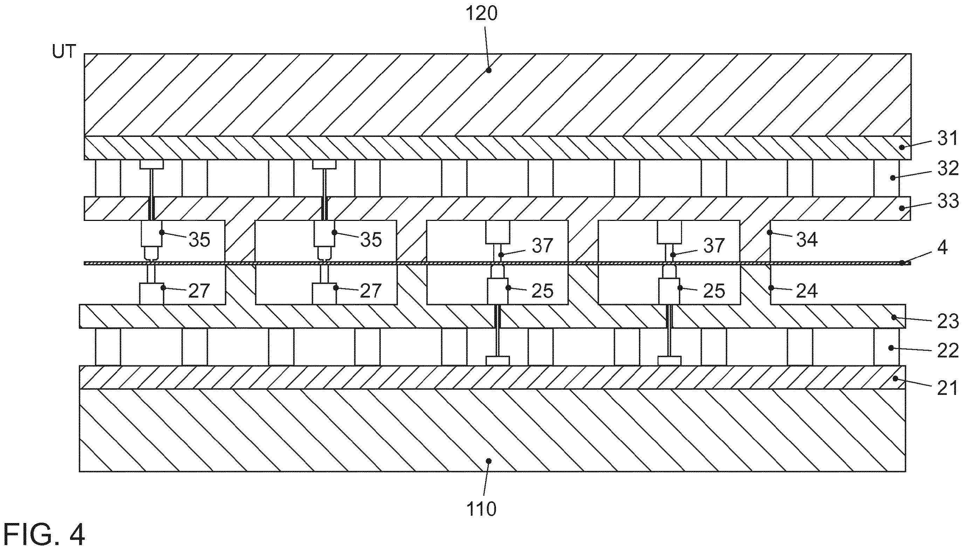

Durch weiteres Absenken D des Werkzeugoberteils 3 wird die obere Grundplatte 31 entgegen der durch die oberen Gasdruckfedern 32 aufgebrachten Kraft F2 in Richtung der oberen Trägerplatte 33 verschoben. Hierbei wird an den oberen Setzköpfen 35 mit Hilfe der sich an der oberen Grundplatte 31 abstützenden oberen Betätigungsstempel 36 jeweils ein Widerstandsschweißelement positionsgenau von oben (d. h. von der oberen Werkstückseite bzw. oberseitig) in das Werkstück 4 eingestanzt bzw. eingepresst. Das vorlochfreie Einstanzen bzw. Einpressen erfolgt gegen die unteren Setzmatrizen 27. In Fig. 4 haben der Pressenstößel 120 und die obere Grundplatte 31 ihren unteren Totpunkt (UT) erreicht. Zu diesem Zeitpunkt sind auch alle Widerstandsschweißelemente von oben gesetzt.

Mit Hilfe der von den unteren Gasdruckfedern 22 und den oberen Gasdruckfedern 32 erzeugten Druckkräfte F1 und F2 wird eine zeitliche Steuerung für das Setzen der Widerstandsschweißelemente von der Werkstückunterseite und der Werkstückoberseite bewerkstelligt. Bei entsprechender Auslegung (F1 > F2) können abweichend zu den vorausgehenden Erläuterungen zunächst die Widerstandsschweißelemente von der Oberseite und dann erst von der Unterseite gesetzt werden.

Die Kraft zum Setzen der Widerstandsschweißelemente wird von der Presse auf die Grundplatten 21 und 31 aufgebracht und über die Betätigungsstempel 26 und 36 in die Setzköpfe 25 und 35 eingeleitet. Der für den eigentlichen Setzvorgang erforderliche Pressenstößelweg entspricht nur einer Teilstrecke der Schließbewegung D und richtet sich nach der Dicke des Werkstücks 4.

Nach dem Öffnen des Werkzeugs 1 durch Anheben des Werkzeugoberteils 3 kann das Werkstück 4 mit den eingestanzten bzw. eingepressten Widerstandsschweißelementen entnommen werden.

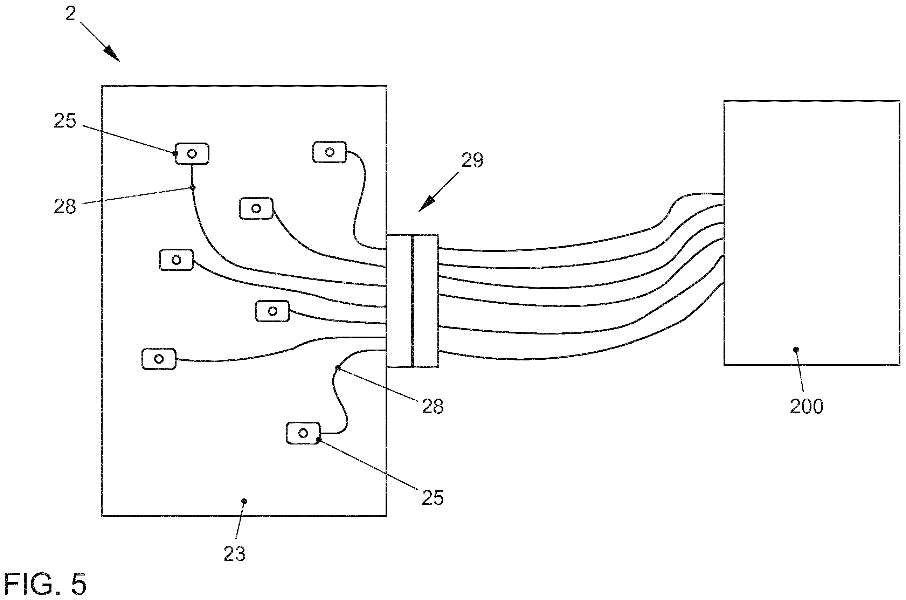

Fig. 5 veranschaulicht die automatische Zuführung der zu setzenden Widerstandsschweißelemente zu den Setzköpfen 25 des Werkzeugunterteils 2. Die zu setzenden Widerstandsschweißelemente werden von einem externen Zuführgerät 200 bereitgestellt und an einer Kupplung 29 vorvereinzelt an das Werkzeugunterteil 2 übergeben. Ausgehend von der Kupplung 29 erfolgt die Zuführung zu den Setzköpfen 25 durch fest installierte Schlauchleitungen 28. Nach jedem Setzvorgang wird selbsttätig ein Widerstandsschweißelement in jeden Setzkopf 25 nachgeschoben (so genanntes Nachladen), bspw. während der Aufwärtsbewegung des Werkzeugoberteils 3 beim Öffnen des Werkzeugs 1.

### Bezugszeichenliste

- 1: Werkzeug
- 2: Werkzeugunterteil
- 21: untere Grundplatte
- 22: untere Gasdruckfeder
- 23: untere Trägerplatte
- 24: untere Werkstückaufnahme
- 25: unterer Setzkopf
- 26: unterer Betätigungsstempel
- 27: untere Setzmatrize
- 28: Zuführleitung, Zuführschlauch
- 29: Kupplung
- 3: Werkzeugoberteil
- 31: obere Grundplatte
- 32: obere Gasdruckfeder
- 33: oberer Trägerplatte
- 34: obere Werkstückaufnahme
- 35: oberer Setzkopf
- 36: oberer Betätigungsstempel
- 37: obere Setzmatrize
- 4: Werkstück
- 110: Pressentisch
- 120: Pressenstößel
- 200: Zuführgerät
- D: Schließrichtung, Schließbewegung
- F1: untere Druckkraft
- F2: obere Druckkraft
- OT: oberer Totpunkt
- UT: unterer Totpunkt

## Patentansprüche

1. Pressengebundenes Werkzeug (1) zum Setzen mehrerer Widerstandsschweißelemente in wenigstens ein flächiges Werkstück (4),
- mit einem auf dem Pressentisch (110) anzuordnenden Werkzeugunterteil (2) und einem am Pressenstößel (120) zu befestigenden Werkzeugoberteil (3) zwischen denen das Werkstück (4) im Wesentlichen vollflächig anordenbar und durch eine Schließbewegung (D) des Werkzeugoberteils (2) in definierter Lage fixierbar ist; und
- mit mehreren Setzköpfen (25, 35), mit denen im Verlauf der Schließbewegung (D) eine Vielzahl von Widerstandsschweißelementen vorlochfrei in das fixierte Werkstück (4) einstanzbar oder einpressbar ist;
**dadurch gekennzeichnet, dass**
die Setzköpfe (25, 35) sowohl im Werkzeugunterteil (2) als auch im Werkzeugoberteil (3) angeordnet sind, wobei mit den Setzköpfen (25, 35) im Verlauf der Schließbewegung (D) von beiden Werkstückseiten eine Vielzahl von Widerstandsschweißelementen in das fixierte Werkstück (4) einstanzbar oder einpressbar ist,
wozu jedes Werkzeugteil (2, 3) eine Grundplatte (21, 31) und eine hierzu über Gasdruckfedern (22, 32) beabstandete und relativbewegliche Trägerplatte (23, 33), an der die Setzköpfe (25, 35) befestigt sind, aufweist und die Trägerplatten (23, 33) zur Betätigung der Setzköpfe (25, 35) während der Schießbewegung (D) gegen die Grundplatten (21, 31) gedrückt werden.

2. Pressengebundenes Werkzeug (1) nach Anspruch 1,
**gekennzeichnet durch**
eine automatische Zuführung der zu setzenden Widerstandsschweißelemente zu jedem Setzkopf (25, 35).

3. Pressengebundenes Werkzeug (1) nach Anspruch 1 oder 2,
**dadurch gekennzeichnet, dass**
die an den Trägerplatten (23, 33) befestigten Setzköpfe (25, 35) mechanisch betätigt sind, wozu diese jeweils einen Betätigungsstempel (26, 36) aufweisen, der sich an der jeweiligen Grundplatte (21, 31) abstützt.

4. Pressengebundenes Werkzeug (1) nach 1, 2 oder 3,
**dadurch gekennzeichnet, dass**
die Gasdruckfedern (22, 32) im Werkzeugunterteil (2) und im Werkzeugoberteil (3) unterschiedliche Druckkräfte (F1, F2) erzeugen, so dass im Verlauf der Schließbewegung (D) zunächst die Widerstandsschweißelemente von einer Werkstückseite und erst dann die Widerstandsschweißelemente von der anderen Werkstückseite in das Werkstück (4) eingestanzt oder eingepresst werden.

5. Pressengebundenes Werkzeug (1) nach einem der vorausgehenden Ansprüche,
**dadurch gekennzeichnet, dass**
dieses wenigstens einen Setzkopf aufweist, mit dem während der Schließbewegung (D) in einen zur Schließrichtung schrägen Werkstückbereich ein Widerstandsschweißelement eingepresst oder eingestanzt werden kann.

6. Verwendung eines pressengebundenen Werkzeugs (1) gemäß einem der vorausgehenden Ansprüche 1 bis 5 zum Setzen von Widerstandsschweißelementen in ein aus Aluminiumblech gebildetes Werkstück (4).

7. Verwendung wenigstens eines pressengebundenen Werkzeugs (1) gemäß einem der vorausgehenden Ansprüche 1 bis 5 in einer mehrere Pressen umfassende Pressenstraße zur Herstellung eines Blechformteils, wobei dieses Werkzeug (1) zum Setzen von Widerstandsschweißelementen anstelle eines Umform- und/oder Schneidwerkzeugs in einer der Pressen eingebaut ist.

8. Verwendung gemäß Anspruch 7, wobei das pressengebundene Werkzeug (1) zum Setzen der Widerstandsschweißelemente zugleich auch eine formgebende Kalibrieroperation oder eine Umform- und/oder Schneidoperation ausführen kann.

9. Verwendung eines pressengebundenen Werkzeugs (1) gemäß einem der vorausgehenden Ansprüche 1 bis 5 zum Setzen von Widerstandsschweißelementen in ein aus Organoblech gebildetes flächiges Werkstück (4).

## Claims

1. Press-bound tool (1) for placing a plurality of resistance welding elements in at least one planar workpiece (4),
- having a tool lower part (2) to be disposed on the press bed (110), and a tool upper part (3) to be fastened to the press ram (120), the workpiece (4) being disposable substantially across the entire area therebetween and being fixable in a defined position by a closing movement (D) of the tool upper part (2);
- having a plurality of placing heads (25, 35) by way of which in the course of the closing movement (D) a multiplicity of resistance welding elements are capable of being punched or pressed into the fixed workpiece (4) without pilot holes;
**characterized in that**
the placing heads (25, 35) are disposed in the tool lower part (2) as well as in the tool upper part (3), wherein by way of the placing heads (25, 35) a multiplicity of resistance welding elements are capable of being punched or pressed from both workpiece sides into the fixed workpiece (4) in the course of the closing movement (D),
to which end each tool part (2, 3) has one base plate (21, 31) and one carrier plate (23, 33) that by way of gas pressure springs (22, 32) is spaced apart from and is movable relative to said base plate (21, 31), the placing heads (25, 35) being fastened to said carrier plate (23, 33), and the carrier plates (23, 33) for activating the placing heads (25, 35) are pressed against the base plates (21, 31) during the closing movement (D).

2. Press-bound tool (1) according to Claim 1,
**characterized by**
an automatic infeed of the resistance welding elements to be placed to each placing head (25, 35) .

3. Press-bound tool (1) according to Claim 1 or 2,
**characterized in that**
the placing heads (25, 35) fastened to the carrier plates (23, 33) are mechanically activated, to which end said placing heads (25, 35) have in each case one activating ram (26, 36) which is supported on the respective base plate (21, 31).

4. Press-bound tool (1) according to Claim 1, 2, or 3,
**characterized in that**
the gas pressure springs (22, 32) generate dissimilar compression forces (F1, F2) in the tool lower part (2) and in the tool upper part (3), such that in the course of the closing movement (D) the resistance welding elements are first punched or pressed into the workpiece (4) from one workpiece side, and the resistance welding elements only then are punched or pressed into the workpiece (4) from the other workpiece side.

5. Press-bound tool (1) according to one of the preceding claims,
**characterized in that**
said tool (1) has at least one placing head by way of which a resistance welding element during the closing movement (D) can be pressed or punched into a workpiece region that is oblique to the closing direction.

6. Use of a press-bound tool (1) according to one of preceding Claims 1 to 5 for placing resistance welding elements in a workpiece (4) that is formed from aluminium sheet.

7. Use of at least one press-bound tool (1) according to one of preceding Claims 1 to 5 in a press line comprising a plurality of presses for the production of a formed sheet metal part, wherein, instead of a forming and/or cutting tool, this tool (1) for placing resistance welding elements is installed in one of the presses.

8. Use according to Claim 7, wherein the press-bound tool (1) for placing the resistance welding elements can simultaneously also carry out a shape-imparting calibration operation or a forming and/or cutting operation.

9. Use of a press-bound tool (1) according to one of preceding Claims 1 to 5 for placing resistance welding elements in a planar workpiece (4) that is formed from organic sheeting.

## Revendications

1. Outil de presse (1) servant à mettre en place plusieurs éléments de soudage par résistance dans au moins une pièce plate (4),
- avec une partie inférieure d'outil (2) à disposer sur une table de presse (110) et une partie supérieure d'outil (3) à fixer à un poinçon de presse (120) entre lesquelles la pièce (4) peut être disposée essentiellement en pleine surface et peut être fixée dans une position définie par un mouvement de fermeture (D) de la partie supérieure d'outil (2); et
- avec plusieurs têtes de mise en place (25, 35), avec lesquelles au cours du mouvement de fermeture (D) une multiplicité d'éléments de soudage par résistance peuvent être enfoncés ou pressés sans trous dans la pièce fixée (4);
**caractérisé en ce que** les têtes de mise en place (25, 35) sont disposées aussi bien dans la partie inférieure d'outil (2) que dans la partie supérieure d'outil (3), dans lequel au cours du mouvement de fermeture (D) une multiplicité d'éléments de soudage par résistance peuvent être enfoncés ou pressés dans la pièce fixée (4) par les deux côtés de la pièce au moyen des têtes de mise en place (25, 35), chaque partie d'outil (2, 3) présentant à cet effet une plaque de base (21, 31) et une plaque de support (23, 33) espacée de celle-ci par des ressorts pneumatiques (22, 32) et mobile par rapport à celle-ci, sur laquelle les têtes de mise en place (25, 35) sont fixées, et les plaques de support (23, 33) sont pressées contre les plaques de base (21, 31) pour l'actionnement des têtes de mise en place (25, 35) pendant le mouvement de fermeture (D) .

2. Outil de presse (1) selon la revendication 1, **caractérisé par** une fourniture automatique à chaque tête de mise en place (25, 35) des éléments de soudage par résistance à mettre en place.

3. Outil de presse (1) selon la revendication 1 ou 2, **caractérisé en ce que** les têtes de mise en place (25, 35) fixées aux plaques de support (23, 33) sont actionnées mécaniquement, celles-ci présentant respectivement un poinçon d'actionnement (26, 36), qui s'appuie sur la plaque de base respective (21, 31).

4. Outil de presse (1) selon la revendication 1, 2 ou 3, **caractérisé en ce que** les ressorts pneumatiques (22, 32) produisent dans la partie inférieure d'outil (2) et dans la partie supérieure d'outil (3) des forces de pression différentes (F1, F2), de telle manière qu'au cours du mouvement de fermeture (D) on enfonce ou on presse d'abord les éléments de soudage par résistance dans la pièce (4) par un côté de la pièce et seulement ensuite les éléments de soudage par résistance par l'autre côté de la pièce.

5. Outil de presse (1) selon l'une quelconque des revendications précédentes, **caractérisé en ce qu'**il présente au moins une tête de mise en place, avec laquelle un élément de soudage par résistance peut être enfoncé ou pressé au cours du mouvement de fermeture (D) dans une région de la pièce oblique par rapport à la direction de fermeture.

6. Utilisation d'un outil de presse (1) selon l'une quelconque des revendications précédentes 1 à 5 pour la mise en place d'éléments de soudage par résistance dans une pièce (4) formée à partir d'une tôle d'aluminium.

7. Utilisation d'au moins un outil de presse (1) selon l'une quelconque des revendications précédentes 1 à 5 dans un train de presses comprenant plusieurs presses pour la fabrication d'une pièce façonnée en tôle, dans laquelle cet outil (1) servant à la mise en place d'éléments de soudage par résistance est monté dans une des presses au lieu d'un outil de déformation et/ou de découpage.

8. Utilisation selon la revendication 7, dans laquelle l'outil de presse (1) servant à la mise en place d'éléments de soudage par résistance peut aussi exécuter en même temps une opération de calibrage de formage ou une opération de déformation et/ou de découpage.

9. Utilisation d'un outil de presse (1) selon l'une quelconque des revendications précédentes 1 à 5 pour la mise en place d'éléments de soudage par résistance dans une pièce plate (4) formée à partir d'une tôle organique.
